# EUROPEAN PATENT APPLICATION

(11) **EP 2 156 747 A1**
(43) Date of publication of application: **24.02.2010**
(21) Application number: 08739862.4
(22) Date of filing: 04.04.2008
(51) Int. Cl.: A23K 1/16, A23K 1/18

(54) **GROWTH STIMULANT FOR FISH**

(30) Priority: 06.04.2007 JP 2007100556
(71) Applicant: Kyowa Hakko Bio Co., Ltd, Chiyoda-ku Tokyo 100-8185 (JP)
(72) Inventor: MATSUKAWA, Tatsushi, Tokyo 103-8503 (JP); NAWATA, Toshihiro, Fukuoka 812-8663, (JP)
(74) Representative: Vossius & Partner
(86) International application number: PCT/JP2008/056756
(87) International publication number: WO 2008/126781

(57) **Abstract**

This invention relates to a growth promoter for fish and a method for promoting the growth of fish. The growth promoter for fish of the present invention includes a preparation comprising histidine as an active ingredient. The method for promoting the fish growth of the present invention includes a method comprising administering histidine or the growth promoter for fish of the present invention to fish. Fish may be any species. Preferably, it is fish of *Carangidae*, such as *Seriola quinqueradiata* and *Trachurus japonicus,* and *Scombridae*, such as tuna, bonito and mackerel. *Carangidae* is more preferable.

## Description

### Technical Field

The present invention relates to a growth promoter for fish and a method for promoting the growth of fish.

### Background Art

The use of living prey, such as sand launces or sardines, occasionally causes the fish-fanning environmental deterioration, such as contamination of a fish farm and development of diseases. Since nutrients in living prey may vary, for example, by seasonal factors, constant growth of fish cannot be always expected.

Further, when feeds comprising fish meal as a major protein source are used, eating or growth of the fish decrease compared with that using living prey, thereby decreasing the survival ratio of some fish species.

To overcome this drawback, feeds for Japanese flounder comprising fish meal partially substituted with feather meal, tryptophan, methionine, lysine and histidine (JP Patent Publication (kokai) H07-31380 A (1995)), and a feed for tuna comprising enzyme-treated fish meal and an eating promoter for fish comprising an amino acid selected from alanine, lysine, glutamic acid and histidine, and inosinic acid (JP Patent Publication (kokai) No. 2006-223164 A) have been developed.

However, the influence of amino acids in such feeds on the fish growth has not been elucidated.

### Disclosure of the Invention

### Object to Be Attained by the Invention

An object of the present invention is to provide a fish growth promoter and a method for promoting the fish growth.

### Summary of the Invention

The present invention relates to (1) to (4), as shown below.
(1) A fish growth promoter comprising histidine as an active ingredient.
(2) A method for promoting the fish growth comprising administration of histidine.
(3) A method for promoting the fish growth comprising administration of the agent of aforementioned (1).
(4) Use of histidine for producing a fish growth promoter.

### Effects of the Invention

The inventions of the present application can provide a fish growth promoter or a method for promoting the growth of fish.

### Description of the Preferred Embodiments

Histidine used in the present invention may be free histidine, a salt of an inorganic or organic acid, such as hydrochloride, sulfate or acetate, or an alkali metal salt, such as sodium salt or potassium salt.

Histidine may be administered to fish as-is. Alternatively, histidine may be mixed with one or more types of carriers, which can be used for a preparation for fish, to produce a preparation containing histidine (hereafter, such preparation is referred to as "the fish growth promoter of the present invention") by using any method well-known in the art of pharmaceutics and feed science for administration to fish.

In the present invention, fish may be any species. Preferably, it is fish of *Carangidae,* such as *Seriola quinqueradiata* and *Trachurus japonicus*, and *Scombridae*, such as tuna, bonito and mackerel. *Carangidae* is more preferable.

Any administrable method may be used to administrate histidine or the fish growth promoter of the present invention to fish. Generally, oral administration is used.

The oral administration includes a method of direct oral administration like general fish feeds, and a method of oral administration of fish feeds by adding into or coating on fish feeds.

The form of the fish growth promoter of the present invention which is adequate for oral administration may be, for example, a powder, granule, paste, or tablet. The powder, granule, or paste is preferable for adding into or coating on the fish feeds.

Carriers used for manufacturing a powder, a granule, a paste, a tablet, and the like include an excipient, such as lactose, glucose, sucrose, wheat flour, mannite and seaweed powder, a disintegrator, such as starch and sodium alginate, a lubricant, such as magnesium stearate and talc, a binder, such as polyvinyl alcohol, hydroxypropylcellulose and gelatin, a surfactant, such as a fatty acid ester, and a plasticizer, such as glycerine.

The fish growth promoter of the present invention may further comprise a dye, vitamins, or the like.

Histidine content in the fish growth promoter of the present invention is generally 1% to 99% by weight, and preferably 10% to 90% by weight.

The fish feeds to which histidine or the fish growth promoter of the present invention is added or which is coated with them include animal products, such as fish meal, fish soluble, casein and squid meal, plant products, such as soybean cake, wheat flour and α-starch, yeast for feeds, animal oils and fats, such as cod-liver oil and squid-liver oil, plant fats and oils, such as soybean oil and rape-seed oil, vitamins, minerals, and antioxidants.

The feeds to which histidine or the fish growth promoter of the present invention is added or which is coated with them can be produced by a conventional method, wherein histidine or the fish growth promoter of the present invention is added to materials for fish feeds and mixed as necessary. Further, the feeds coated with histidine or the fish growth promoter of the present invention can be produced by coating fish feeds manufactured by a conventional method with histidine or the fish growth promoter using a conventional technique.

In addition to such administration method comprising administration of histidine or the growth promoter for fish of the present invention to fish, the method for promoting the fish growth of the present invention includes a conventional fish culture technique.

In order to efficiently promote the growth of fish, histidine or the fish growth promoter of the present invention is administered to a fish so that the dose of histidine per fish per day is adjusted to 0.001g to 10g, preferably 0.01g to 5g and more preferably 0.05g to 2g.

The timing of administration of histidine or the fish growth promoter of the present invention is not particularly limited, and such administration is preferably carried out at the alevin stage or fingerling stage.

Hereafter, the examples of the present invention are described.

### Example 1

Histidine was added to fish feeds comprising, for example, fish meal, fish soluble, corn gluten meal, soybean cake and meal, wheat flour, bran of *Shirozake*, fish oil, garlic, glycyrrhiza extract and betaine, with 0.5% by weight of the mixture.

17,800 of young yellowtails were introduced into floating wet-cage, and histidine-added feeds were fed thereto in accordance with a conventional technique.

In contrast, 17,100 of young yellowtails were introduced into floating wet-cage, and feeds to which histidine was not added were fed thereto as a control group in accordance with a conventional technique.

The body weight of the fish and the amount of the feeds were measured at the time of initiation of the test, during the test (for 57 days), and 57 days after the initiation of the test, and the increasing rate of body weight and the survival ratio were determined.

The results are shown in Table 1.

**Table 1**

| | Control group | Test group |
|---|---|---|
| Average body weight (g) at the time of initiation of the test | 223 | 177 |
| Average body weight (g) during the test (57 days) | 423 | 443 |
| Average body weight (g) 57 days after the initiation of the test | 623 | 709 |
| The number of fish at the time of initiation of the test | 17100 | 17800 |
| The number of fish 57 days after the initiation | 16500 | 17485 |
| Total amount of feeds (kg) | 11120 | 10490 |
| Increasing rate of body weight * | 1.8 | 3.0 |
| Survival ratio (%) | 96.5 | 98.2 |

| | | |
|---|---|---|
| * Increasing rate of body weight: (average body weight 57 days after the initiation of test - average body weight at the time of initiation of the test)/average body weight at the time of initiation of the test | | |

As shown in Table 1, the test group feeding histidine-added feeds exhibited a high increasing rate of body weight and substantially no lowering in the survival ratio.

### Example 2

Histidine (100 parts by weight), astaxanthin (10 parts by weight), and seaweed powder (110 parts by weight) are mixed to produce a growth promoter.

### Industrial Applicability

The present invention can provide a fish growth promoter and a method for promoting the fish growth.

## Claims

1. A fish growth promoter comprising histidine as an active ingredient.

2. A method for promoting the fish growth comprising administration of histidine.

3. A method for promoting the fish growth comprising administration of the agent of claim 1.

4. Use of histidine for producing a fish growth promoter.
